# EUROPEAN PATENT SPECIFICATION

(11) **EP 4 690 248 B1**
(45) Date of publication and mention of the grant of the patent: **09.12.2026**
(21) Application number: 24711595.9
(22) Date of filing: 04.03.2024
(51) Int. Cl.: G21C 7/12

(54) **SWITCHING SYSTEM AND METHOD FOR SWITCHING A CONTROL ROD ASSEMBLY BETWEEN A PLURALITY OF FUEL ASSEMBLIES IN A NUCLEAR REACTOR**
UMSCHALTSYSTEM UND VERFAHREN ZUM UMSCHALTEN EINER STEUERSTABANORDNUNG ZWISCHEN MEHREREN BRENNELEMENTEN EINES KERNREAKTORS
SYSTÈME DE COMMUTATION ET PROCÉDÉ DE COMMUTATION D'UN ENSEMBLE TIGE DE COMMANDE ENTRE UNE PLURALITÉ D'ASSEMBLAGES COMBUSTIBLES DANS UN RÉACTEUR NUCLÉAIRE

(30) Priority: 05.04.2023 FI 20235387
(43) Date of publication of application: 11.02.2026
(73) Proprietor: Steady Technologies Oy, 02100 Espoo (FI)
(72) Inventor: LEPPÄNEN, Jaakko, 02150 Espoo (FI); HOVI, Ville, 02150 Espoo (FI)
(74) Representative: Laine IP Oy
(86) International application number: PCT/FI2024/050083
(87) International publication number: WO 2024/209132

(56) References cited:
- WO-A1-2023/161559
- CN-A- 108 648 841
- US-A- 5 521 950
- US-A- 6 047 037
- US-A1- 2011 235 769
- US-A1- 2013 044 850
- US-A1- 2014 133 619
- US-A1- 2021 210 221

## Description

### FIELD

The present disclosure relates to a system for switching control rods between fuel assemblies. The present disclosure also relates to a system for switching control rods and drive assemblies between fuel assemblies. The present disclosure also relates to a method of switching control rods between fuel assemblies.

### BACKGROUND

Nuclear fission reactors generate heat via a process of neutron chain reaction. The operating state of the reactor is adjusted by changing the neutron absorption rate in the reactor core. In general terms, this is referred to as reactivity control. One of the established methods for reactivity control is to use movable control rods or control rod containing neutron absorbing material, such as cadmium or boron. Inserting the control rods deeper into the reactor core increases, and withdrawing the rods reduces neutron absorption. The reactor core is made up of a plurality of fuel assemblies, where each fuel assembly interacts with a set of control rods or a control rod assembly. These components are located inside a reactor.

Fuel assemblies will undergo a limited number of operating cycles and at the end of the operating cycle, the fuel assemblies may be taken out of the reactor so that they are subject to a different configuration. The different configuration may include switching a different control rod assembly from a fuel assembly to another fuel assembly that has undergone an operating cycle or using a new fuel assembly with a control rod assembly from a fuel assembly that has undergone an operating cycle. To move or switch the control rod assemblies between fuel assemblies requires taking out the control rod assemblies from several respective fuel assemblies with high precision in order to avoid damaging the control rod assemblies and other components. Then the reconfigured fuel assemblies undergo a reloading operation, i.e. be loaded back into the reactor for the next operating cycle.

Some reactor concepts use control rod drive mechanisms that are placed inside the pressure vessel to drive the control rod assemblies.

Current solutions for switching control rod assemblies between fuel assemblies may be specific to the design of the nuclear reactor and the way the control rod system has been implemented. In pressurized water type reactors, where the control rods are inserted into guide tubes which are a part of the assembly structure, the common denominator is that the rods must be lifted out of the fuel assembly, and placed into another assembly. This can be done inside or outside the reactor core, depending on the practical arrangements.

Small modular reactors and the LDR (Low-Temperature District Heating and Desalination Reactor) often have a control rod configuration where control rods are shorter in length than that of conventional nuclear reactors. Further, the LDR has a control rod system that works in conjunction with an integrated drive system, i.e. the drive system is in the vessel and drives the control rods directly. Relevant prior art documents are for example CN 108648841 A, US 2011/235769 A1, US 2014/133619 A1, US 2013/044850 A1, or US 2021/210221 A1.

There is a need to switch control rod assemblies between fuel assemblies with precision and efficiently so that the control rod assemblies and fuel assemblies are handled safely and so that they are quickly prepared for the next operating cycle. In the LDR district heating reactor the control rod system is configured in such way that the control rod drives and support structures are attached to the fuel assemblies, to form individually movable units. This also affects the way the switching operation should be conducted.

There is also a need to provide a device and method for the control rod configuration of the LDR.

### SUMMARY

A novel switching system is therefore herein proposed. The invention is defined by the features of the independent claims. Some specific embodiments are defined in the dependent claims.

According to a first aspect of the present disclosure, there is provided a switching system for switching a control rod assembly between a plurality of fuel assemblies of a respective plurality of fuel and control modules of a nuclear reactor, where each one of the plurality of fuel and control modules comprises a drive assembly, a control rod assembly and a fuel assembly. The switching system features a frame, a magazine movably attached to the frame, the magazine comprising a plurality of holding positions each configured to receive a fuel assembly, an extractor provided to the frame, and a first drive train, which is configured to provide respective movement between the magazine and the frame for selectively aligning any one of said plurality of holding positions with the extractor, where the extractor is configured to: attach to a drive assembly or a control rod assembly, or a drive assembly and a control rod assembly of one of the plurality of fuel and control modules, and to directly or indirectly extract a control rod assembly from a fuel assembly located in one of the plurality of holding positions and to introduce the control rod assembly to a fuel assembly located in another holding position.

One or more embodiments of the first aspect may include one or several features from the following itemized list:
- the extractor is configured to move between an attaching position, in which the extractor is attached to the drive assembly or the control rod assembly, and an extracted position, in which the extractor has extracted the drive assembly or the control rod assembly, or the drive assembly and the control rod assembly from the magazine;
- the frame comprises an extractor access port configured to align the extractor with and provide access to one of the plurality of holding positions;
- the frame comprises a guide, which is configured to guide the extractor between the attaching position and the extracted position, and a second drive train, which is configured to provide respective movement between the extractor and the guide for moving the extractor between the attaching position and the extracted position;
- the extractor comprises a coupler configured to provide a direct or indirect mechanical attachment between the extractor and the control rod assembly;
- the coupler is an extractor electromagnet, where the extractor electromagnet is configured to attach the extractor to the drive assembly;
- the drive assembly and the control rod assembly are configured to move as one unit, whereby the extractor is configured to indirectly manipulate the control rod assembly, when the extractor is attached to the drive assembly;
- the first drive train is configured to provide respective rotation or translation between the magazine and the frame for selectively aligning any one of said plurality of holding positions with the extractor;
- the switching system further comprising an electrical connector configured to provide an electrical connection to the drive assembly for powering a drive assembly;
- the extractor comprises the electrical connector and the drive assembly comprises an electrical connector counterpart;
- the electrical connector counterpart is configured to connect to the electrical connector and selectively power the drive assembly electromagnet and the drive assembly motor, when the extractor attaches to the drive assembly at the attachment position of the extractor;
- the extractor is configured to manipulate the drive assembly so that the drive assembly selectively attaches to and detaches from a casing, where the fuel and control module comprises the casing attached to the fuel assembly, and
- the extractor is configured to move the control rod assembly within an inner space, where the casing defines the inner space, and where the drive assembly is configured to drive the control rod assembly within the inner space.

According to a second aspect of the present disclosure, there is provided a method for switching a control rod assembly between a plurality of fuel assemblies located within the switching system. The method features aligning the extractor with a first holding position containing a first fuel and control module; attaching the extractor directly or indirectly to a first control rod assembly of the first fuel and control module at an attaching position of the extractor; extracting the first control rod assembly of the first fuel and control module by the extractor, where the first control rod assembly is completely removed from the first fuel assembly of the first fuel and control module; providing respective movement between the extractor and the magazine for aligning the extractor with a second holding position containing a second fuel assembly of a second fuel and control module, and introducing the first control rod assembly to the second fuel assembly by the extractor.

One or more embodiments of the second aspect may include one or several features from the following itemized list:
- forming, after attaching and before extracting, an electrical connection between the switching system and the first drive assembly of the first fuel and control module;
- withdrawing, after forming and before extracting, where the casing defines an inner space and the first control rod assembly is withdrawn, at least partially, by the first drive assembly from a first fuel assembly of the first fuel and control module within the inner space;
- inserting, after introducing, the first control rod assembly into the second fuel assembly, where the control rod assembly travels within the inner space;
- where aligning, attaching, extracting, providing and introducing make up a first switching procedure, and the method further features a second switching procedure, the second switching procedure comprising repeating the steps in the first switching procedure for different and separate control rod assemblies and fuel assemblies, and
- where the extractor attaches to the first drive assembly via the coupler.

Considerable benefits are gained with the aid of the novel switching system. The switching system can provide high precision and handling of the control rods through the movement of the drive assembly and movement of the extractor and precision alignment of such components. This allows control rods to be transported safety and it avoids damaging the control rods and other components. Further, the switching system is able to provide a time and energy-efficient manner of switching control rods between fuel assemblies due to the movement provided between the extractor and the magazine and the position of the holding positions within the magazine. This saves time in the switching operation and thus a reconfigured set of fuel assemblies can be reloaded into the reactor in a time-efficient manner.

A particular benefit is that the switching system can easily provide switching of control rods and drive assemblies between fuel assemblies for fuel and control modules that have drive assemblies. Further, the drive assemblies aid in the high precision handling of the control rods.

The present invention enables performing the sequence of operations needed for switching the control rods between different fuel assemblies in an automated and safe manner. Criticality safety can be ensured by geometry, and the use of a specifically designed switching device for high-precision movements reduces the risk of human error and shortens the length of the refueling outage. The device itself is well suited for the control rod system of the LDR district heating reactor, considering its characteristic features and safety requirements.

The device and methods provided herein are beneficial for such reactors, especially for the shorter-length control rods. Further, the device and methods provided herein are beneficial since the device is able to control and manipulate an integrated control rod assembly and drive assembly module. Furthermore, the device and methods provided herein are beneficial since the device is able to interact with an integrated module that has a control rod assembly, a drive assembly and a fuel assembly integrated with one another. This module may also have a casing that aids in the withdrawal of control rods from the fuel assembly and aids in the attachment/separation of the integrated control rod assembly and drive assembly module to/from the fuel assembly.

### BRIEF DESCRIPTION OF THE DRAWINGS

In the following certain exemplary embodiments are described in greater detail with reference to the accompanying drawings, in which:
- FIGURE 1: illustrates a perspective view of a switching system and a fuel and control module in accordance with at least some embodiments;
- FIGURE 2: illustrates a perspective view of the switching system in accordance with at least some embodiments;
- FIGURE 3: illustrates a perspective exploded view of the switching system in accordance with at least some embodiments;
- FIGURE 4: illustrates a perspective view of a drive assembly;
- FIGURE 5A: illustrates a perspective view of a control rod assembly;
- FIGURE 5B: illustrates a perspective section view of the control rod assembly of FIGURE 5A;
- FIGURE 6: illustrates a perspective view of the drive assembly of FIGURE 4 and the control rod assembly of FIGURE 5A;
- FIGURE 7: illustrates a perspective view of the switching system in accordance with at least some embodiments;
- FIGURE 8: illustrates a perspective view of the switching system in accordance with at least some embodiments;
- FIGURE 9: illustrates a perspective view of the switching system in accordance with at least some embodiments;
- FIGURE 10A: illustrates a top view of a magazine in accordance with at least some embodiments, and
- FIGURE 10B: illustrates a top view of a magazine in accordance with at least some embodiments.

### EMBODIMENTS

"Electrical connector" refers to an electrical connection, for example electrical leads or wires which may connect to a socket or other leads of another component. "Electrical connector counterpart" refers to a socket or another electrical connection, for example an electrical connection meant to connect the ends of electrical leads. "Attachment" without the connotation of "electrical" may refer to a physical attachment between surfaces or components and may refer to mating surfaces between surfaces or components.

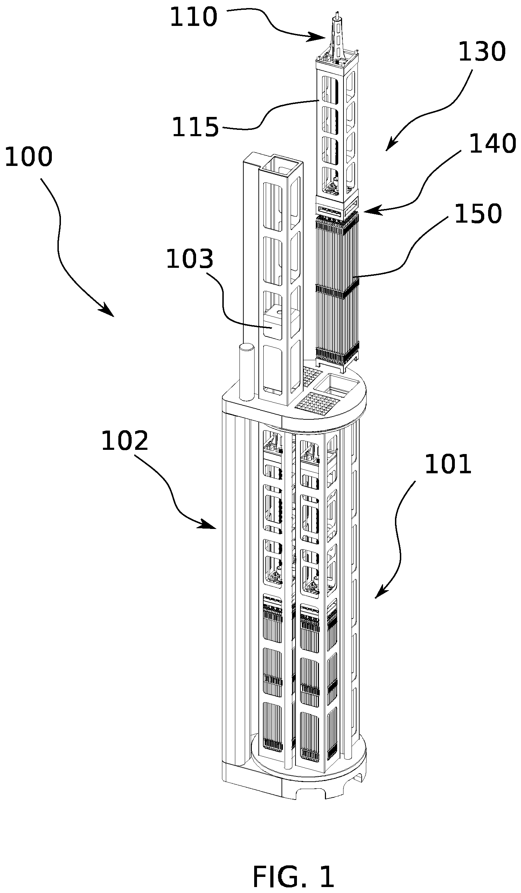

FIGURE 1 illustrates a switching system 100 in accordance with at least some embodiments. The switching system 100 comprises a magazine 101 movably attached to a frame 102. The switching system 100 is used for switching control rods or control rod assemblies 140 between fuel assemblies 150. A group of control rods or a control rod assembly 140 and a fuel assembly 150 belong to a group of components, referred to as a fuel and control module 130. One fuel and control module 130 typically has one fuel assembly 150, one control rod assembly 140, and one drive assembly 110. The fuel and control module 130 may also have a casing 115. The casing 115 may allow for simple manipulation of the drive assembly 110 and the control rod assembly 140. The casing 115 may be fixedly attached to the fuel assembly 150. The casing 115 may serve as a structure for the drive assembly 110 to rest on, where the drive assembly 110, if lifted, is able to separate from the casing 115 and the fuel assembly 150.

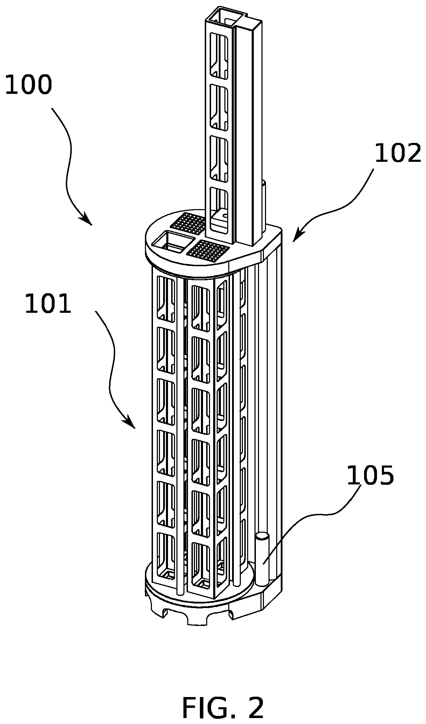

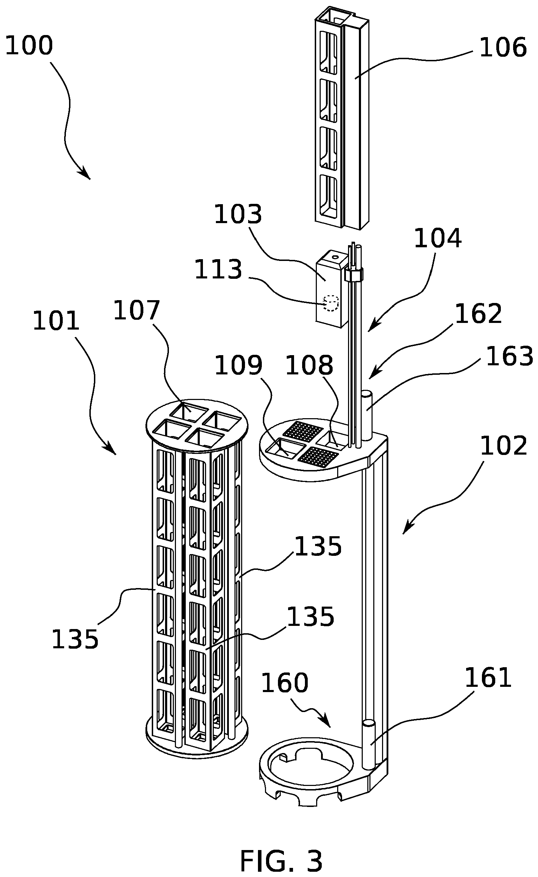

FIGURE 2 and FIGURE 3 illustrate the switching system 100 leaving out the fuel and control module 130. The magazine 101 is a component for accepting the fuel and control modules 130. The magazine 101 has a plurality of holding positions 135 that define a space where each fuel and control module 130 is positioned within the magazine 101. The holding positions 135 are at a sufficient distance apart from each other to ensure criticality safety of the fuel assemblies 150, and to allow coolant to adequately flow through the holding positions 135. The holding positions 135 may take the form of a chamber as illustrated in FIGURE 3 and may be at least partially elongated in a vertical direction as to have sufficient material to hold at least a part of the fuel and control module 130. The holding position 135 mainly serves to hold (or receive) at least a part of the fuel assembly 150 of a fuel and control module 130. Alternatively, the magazine 101 may comprise a plate so that the fuel and control module 130 will attach to the plate in order to hold the fuel and control module 130. The magazine has at least one module opening 107 in order to accept one or more fuel and control modules 130. In the illustrated embodiment, the magazine 101 has four holding positions 135 in the form of a chamber where the top of the magazine has one module opening 107 for each holding positions 135 and aligned with the corresponding holding position 135. According to the illustrated embodiment, the magazine 101 has a plate at the bottom in order for the fuel assembly 150 of a fuel and control module 130 to rest on. The holding positions may have holes to allow for coolant to flow through.

According to the illustrated embodiments in FIGURE 2 and FIGURE 3, the holding positions 135 are arranged in a square pattern as seen from above 102.

The magazine 101 may have a movement mechanism known in the art to provide respective movement between the magazine 101 and the frame.

The switching system 100 has a frame 102, which, in general, has a body and structure to provide the extractor 103, and the extractor 103 itself. According to the illustrated embodiments in FIGURE 2 and FIGURE 3, the frame 102 is elongated in the vertical direction where there is a bottom area and a top area, where the top area is shown as a plate and the bottom area is shown as a ring-like structure.

In general, the switching system 100 has a first drive train 160 and a first motor 161 to provide respective movement between the magazine 101 and the extractor 103 in order for the extractor 103 to access control rod assemblies 140 of different fuel and control modules 130. The first drive train 160 may be located on the magazine 101 or the frame 102 or on both the magazine 101 and the frame 102. The first drive train 160 may also be movably attached to the extractor 103. The first drive train 160 may be a drive train known in the art, for example a transmission such as a gear or gears. The first motor 161 may be located on the magazine 101, the frame 102, the extractor 103, or elsewhere since the first motor 161 may be at a farther location and the first drive train 160 would provide the transmission between the first motor 161 and the component under such movement. According to the illustrated embodiments in FIGURE 1 - FIGURE 3 and FIGURE 7 - FIGURE 9, the bottom area of the frame 102 is where the first drive train 160 is located, which has a first motor 161. The first drive train 160 may be movably attached to the magazine 101. The first motor 161 may be a DC motor, stepper motor, linear actuator or other motor known in the art for providing respective movement between components. Likewise, the first drive train 160 may be a transmission or other mechanism known in the art for providing respective movement between components. The bottom area, or where the first drive train 160 is located, may be located elsewhere as long as it provides respective movement between the magazine 101 and the frame 102.

According to the illustrated embodiments in FIGURE 2 and FIGURE 3, the top area of the frame 102 is in the form of a plate. The top plate has an extractor access port 108 and a loader opening 109. According to the illustrated embodiment in FIGURE 3, the extractor access port 108 is aligned vertically with the extractor 103. The loader opening 109 is located at a different position than the extractor access port 108 to allow for a loader to load a fuel and control module 130 through the loader opening 109 and into one of the holding positions 135 of the magazine 101. The top plate may have sections to allow for coolant to flow directly above or below to a control rod assembly 140 and a fuel assembly 150.

According to the illustrated embodiments in FIGURE 2 and FIGURE 3, the bottom area and top plate are positioned away from each other to allow for the magazine to fit in between the space between the plates. This may allow for the magazine 101, according to the illustrated embodiment in FIGURES 2 and 3, to be structurally held by the frame 102.

The switching system 100 has a mechanism to extract and introduce the control rod assembly 140 of a corresponding fuel and control module 130 from and to a fuel assembly 150. The extraction and introduction are accomplished by providing respective vertical movement between the extractor 103 and the magazine 101. This is accomplished with a second drive train 162 and a second motor 163. The second drive train 162 may be located on the frame 102, the magazine 101, or the extractor 103 or any combination of these. The second motor 163 may be located on the frame 102, magazine 101, the extractor 103 or elsewhere as long as the second drive train 162 is movably attached between the second motor 163 and the desired component for providing an extraction/introduction motion, e.g. the extractor 103. Extraction refers to the extractor being in relative movement whilst causing the control rod assembly 140 to be at least partially removed from the fuel assembly 150. Introduction refers to the extractor being in relative movement whilst causing the control rod assembly 140 to be at least partially guided in a vertical direction (and aligned with the fuel assembly 150) towards the fuel assembly 150.

According to the illustrated embodiments in FIGURE 2 AND FIGURE 3, a vertically elongated guide 104 extends from the top plate. The extractor 103 is movably attached to the guide 104. The second drive train 162 is attached to the frame 102, and may be attached to the guide 104, and the second motor 163 is attached to the frame 102 in close proximity to the guide 104 for convenient attachment to the second drive train 162. According to the illustrated embodiment, the guide 104, the second drive train 162 and the second motor 163 make up a linear actuator to translate the extractor 103 vertically. At least part of the guide 104 makes up the second drive train 162, which may be a linear actuator component, a threaded component, or other motorized component well known in the art. The guide 104 may have a threaded rod to allow the extractor 103 to translate about the guide 104. The guide 104 may also have guiding tubes to provide a stable movement of the extractor 104 while moving along the guide 104. The guide 104 is located in close proximity to the extractor access port 108 in order for the extractor 103 to move close to the extractor access port 108. The guide 104 has a length sufficient to allow the extractor 103 to travel a desired vertical distance.

The extractor 103 has a shape that may fit inside the extractor access port 108 or may be larger and can travel to a position above and near the extractor access port 108. The extractor 103 has a coupler 113. According to the illustrated embodiments FIGURE 2, FIGURE 3 and FIGURE 7 - FIGURE 9, the extractor 103 has a hollow housing to house the coupler 113. The coupler 113 may have an electrical connector or socket to connect to the electrical connector counterpart 111 located on the drive assembly 110. The electrical connector may be elsewhere within the structure of the extractor 103 or the electrical connector may be provided by a structure separate from the extractor 103 or elsewhere within the switching system 100. A cover 106 may be installed over the guide 104 and extractor 103 to provide protection to these components. The cover may also provide structural rigidity to the guide 104.

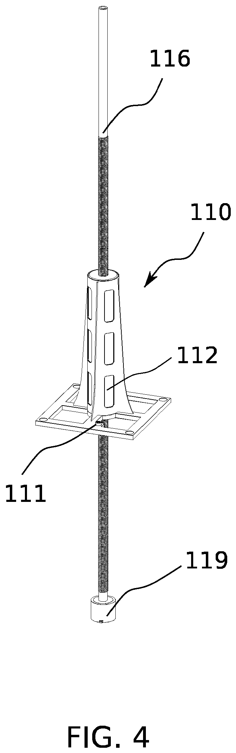

FIGURE 4 illustrates the drive assembly 110 according to at least some embodiments. In general, the drive assembly 110 has a drive assembly motor 112, a driving shaft 116 movably attached to the drive assembly motor 112 and a drive assembly electromagnet 119 attached to the driving shaft 116. The drive assembly 110 also has an electrical connector counterpart 111 in which an electrical connection is provided to. The drive assembly electromagnet 119 is connected to the electrical connector counterpart 111 via e.g. a wire, in order to provide the drive assembly electromagnet 119 with power. According to the illustrated embodiment of FIGURE 4 the driving shaft 116 is threaded which allows the driving shaft 116 to travel vertically by the driving motor 112. The driving shaft 116 may have a shaft opening through its center extending the length of the driving shaft 116 to allow for a part of the control rod assembly 140 to travel through the shaft opening.

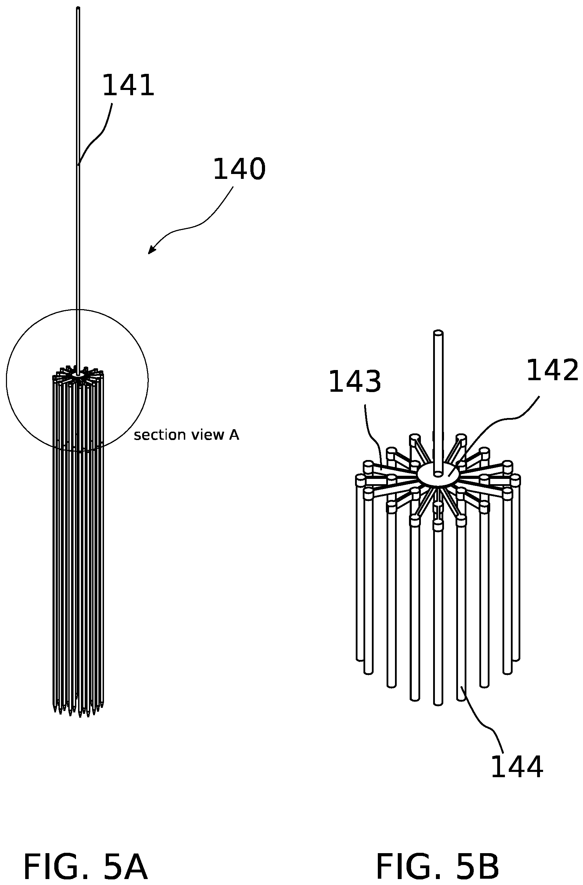

FIGURE 5A and FIGURE 5B illustrate the control rod assembly 140 according to at least some embodiments. According to the illustrated embodiments, the control rod assembly 140 has a control rod assembly shaft 141 that may travel through the shaft opening. The control rod assembly 140 has a control rod assembly surface 142 which can selectively attach to the drive assembly electromagnet 119. Therefore, the control rod assembly surface 142 is preferably a metallic surface. The control rod assembly 140 may have a plurality of supports 143 to join together a plurality of control rods 144.

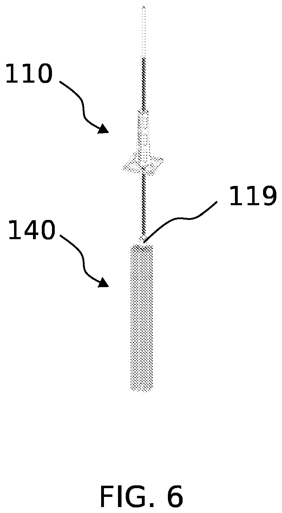

FIGURE 6 illustrates the drive assembly 110 alongside the control rod assembly 140 according to at least some embodiments. According to at least some embodiments, while the control rod assembly 140 is at the position shown in FIGURE 6 (i.e. where the control rod assembly surface 142 is in contact with the electromagnet 119), the control rod assembly shaft 141 may be inside the shaft opening of the drive assembly 110.

The motors 161 and 163 may be controlled with microcontrollers or computers or other controlling means known in the art and therefore a desired movement of the extractor 103, the magazine 101, or the frame 102 is feasible.

The following paragraphs describe the usage of components of the switching system 100.

The switching system 100 is able to transport or switch control rods between fuel assemblies 150. Before the switching process occurs, a loader can load a plurality of fuel and control modules 130 into the switching system 100. This is accomplished by the loader first holding onto a fuel and control module 130 and transporting a fuel and control module 130 to align with a holding position 135. The loader aligns the fuel and control module 130 with the holding position 135 by positioning above or below a holding position, and where the extractor 103 does not cause an obstruction in the path of travel of the loaded fuel and control module 130. According to the illustrated embodiment in FIGURE 3, the loader loads a fuel and control module 130 through the loader opening 109, which is a different opening as the extractor access port 108.

However, in a different embodiment the loader could load the fuel and control module 130 through the same opening as the extractor access port 108 as long as the extractor 103 is not obstructing the path of the loading process. For example, the extractor 103 could move to a different position to move out of the way of the loaded fuel and control module 130.

Then, the loader transports, preferably by raising or lowering, the fuel and control module 130 into the holding positions 135. The loader can detach from the fuel and control module 130 once the fuel and control module 130 is appropriately placed and stable within the magazine 101 and accurately positioned in the appropriate holding position 135. The loader can locate another fuel and control module 130 (at a different location) and repeat the loading procedure. This can be repeated for the desired amount of fuel and control modules 130 to be handled by the switching system 100.

In general, the loader loads a desired amount of fuel and control modules 130 into the magazine 101. The magazine 101 can move relative to the frame 102. Therefore the loader is able to load a plurality of fuel and control modules 130 via one opening of the frame 102, and then the magazine 101 can move (relative to the frame 102 and loader opening 109) in a manner where the magazine 101 is loaded with one fuel and control module 130 per desired number of holding positions.

According to at least some embodiments, the loading is accomplished by loading a first fuel and control module 130 into a first holding position. The loader may load the first fuel and control module 130 through the loader opening 109 as illustrated in FIGURE 3. Then the magazine 101 can rotate while the frame 102 is stationary so that the loader can access a second fuel and control module 130. According to a different embodiment, the magazine 101 can translate while the frame 102 is stationary so that the loader can access the second fuel and control module 130.

The fuel and control module 130 may have a casing 115. The casing 115 may facilitate the loading operations of the loader. The casing 115 may have an opening or mechanism to allow for simple attachment between the casing 115 and the loader. The casing may be configured in a manner to allow the complete fuel and control module 130 to be lifted, lowered and manipulated by the loader solely with the attachment between the loader and the casing 115. This may be accomplished by a temporary attachment, such as a pin and hole feature, between the casing 115 and the drive assembly 110. The casing 115 is beneficial as the loader can manipulated the fuel and control module 130 and detach/attach easily from the fuel and control module 130, while at the same time the temporary attachment allows also the drive assembly 110 to be detached/attached easily from the casing 115 when being extracted.

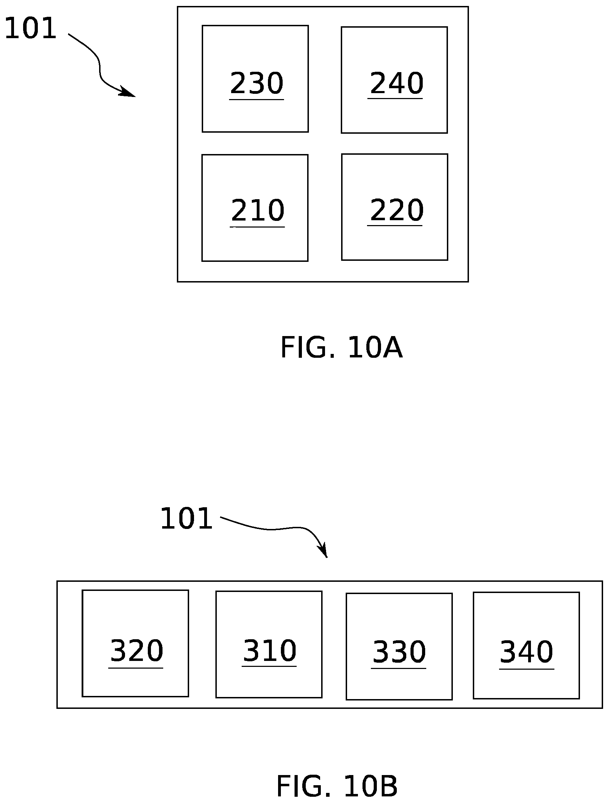

FIGURE 10A illustrates a magazine 101 from a top view according to at least some embodiments. The plurality of fuel and control modules 130 may each be loaded into any one of the holding positions 210, 220, 230 and 240. According to at least some embodiments, the magazine in this configuration rotates. To minimize the amount of time and energy spent on the rotating, the order of holding positions 135 that are being loaded could be in a clockwise pattern, for example going in the following order: 220, 210, 230, 240.

A holding position 135 could have a fuel and control module 130 or a fuel assembly 150 on its own. For the purpose of efficient fueling, there may be one fuel assembly 150 on its own (or may also have the casing 115) in a holding position 135, and the remainder of the holding positions 135 would hold a fuel and control module 130. The fuel assembly 150 on its own would ideally be a new fuel assembly 150 (i.e. has not yet gone through an operating cycle in the reactor). The holding positions 135 holding a fuel and control module 130 would ideally have a fuel assembly 150 which has been through at least one operating cycle.

After the holding positions 135 are loaded, the extractor 103 may align with a holding position 135. This may be achieved by providing respective movement by the first drive train 160 and the first motor 161 between the extractor 103 and the magazine 101. The respective movement may be rotation and/or translation. This respective movement may be referred to as the first respective movement.

According to at least some embodiments, the respective movement caused by the first drive train 160 and the first motor 161 is a translation. The first drive train 160 may cause either the frame 102 or the magazine 101 to translate. For example, the magazine 101 may comprise 4 holding positions 135 positioned in one line (as viewed from above) and the magazine 101 could be on a conveyor which translates linearly. FIGURE 10B illustrates the magazine according to at least some embodiments. The illustrated embodiment shows the holding positions 320, 310, 330 and 340 positioned along an imaginary line, which is an ideal configuration for a translating magazine 101 or translating frame 102 as mentioned above. Of course, there may be as many holding positions 135 as desired. Also, rows of holding positions 135 are possible as well, which may require an additional drive train to provide movement in another axis.

According to at least some embodiments, the respective movement caused by the first drive train 160 and the first motor 161 is a rotation. The first drive train 160 may cause either the frame 102 or the magazine 101 to rotate. According to the illustrated embodiments in FIGURES 1-3 and FIGURES 7-9, the frame 102 is stationary and the magazine 101 is able to rotate. Alternatively, the magazine 101 may be fixed to a structure and thus be stationary, and the frame 102 is able to rotate about the magazine 101.

To avoid damaging the parts of the fuel and control module 130, high accuracy positioning and thus high accuracy alignment between the control rod assembly 140 and the fuel assembly 150 are required. For example, the first motor 161 and the second motor 163 may be quality positioning motors such as stepper motors.

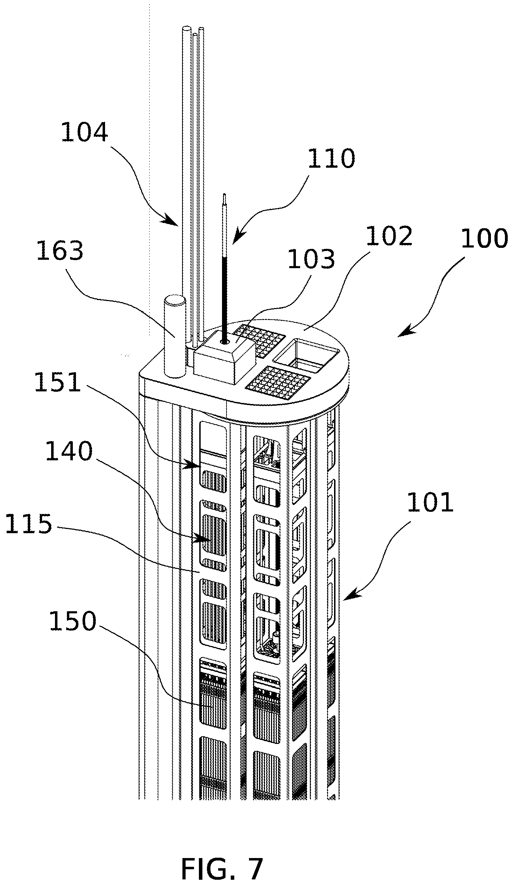

According to at least some embodiments, the alignment of the extractor 103 with a holding position 135 means that the extractor 103 is above or below the desired holding position 135 and positioned so that the extractor 103 can later be lowered or raised accurately towards the holding position 135. The objective is to align with a fuel and control module 130 to eventually access and extract the control rod assembly 140. According to the illustrated embodiments FIGURES 1-3 and FIGURE 7-9, the magazine 101 rotates until the extractor 103 aligns with a desired holding position 135. The frame 102 has the extractor access port 108 where the extractor 103 is in alignment with the extractor access port 108. According to FIGURES 1-2 and FIGURES 7-9 the extractor 103 is aligned with a holding position 135. FIGURE 2 and FIGURE 7 illustrate the extractor 103 which successfully enters the chamber defined by the holding position 135, meaning that the extractor 103 was properly aligned with the holding positions 135.

When the extractor 103 is properly aligned with a desired holding position 135 (subsequent to the first respective movement), the extractor starts to lower or rise in order to access the drive assembly 110 of the desired holding position 135. This is achieved by a second respective movement between the extractor 103 and the magazine 101. The second respective movement is a vertical movement.

According to the illustrated embodiments in FIGURES 1-3 and FIGURES 7-9, the extractor undergoes the second respective movement by lowering in a vertical direction. This is accomplished by the second drive train 162 and the second motor 163 being powered and allowing the extractor to run along the guide 104. The second drive train 162, the second motor 163 and the guide 104 make up a linear actuator.

As illustrated in FIGURE 1, the extractor 103 is above the magazine 101. When the extractor 103 sufficiently lowers from the illustrated position, the extractor will come into contact with the drive assembly 110. At this point the extractor 103 may attach to the drive assembly 110 and may indirectly attach to the control rod assembly 140. This may be referred to as the attaching position and the attachment may be accomplished via a coupler 113. This step may be referred to as the first attachment step. For example, the coupler 113 may be an extractor electromagnet and therefore provide mechanical attachment between the extractor 103 and the drive assembly 110 when the extractor 103 comes into contact to the drive assembly 110. The extractor electromagnet may electromagnetically attach to the drive assembly 110 via the frame of the drive assembly motor 112 or another structure on the drive assembly 110. The extractor electromagnet may be powered through an external power source.

Alternatively, the extractor 103 attaches directly to the control rod assembly 140. This may be accomplished, for example, by the extractor 103 grabbing onto the free end of the control rod assembly shaft 141 via a pin and hole attachment between the coupler 113 and the control rod assembly shaft 141. In this embodiment, there may be no need to drive the control rod assembly 140 by the drive assembly 110 and therefore a drive assembly motor 112 may not be necessary.

The main objective of the coupler 113 is to have a direct or indirect mechanical attachment between the extractor 103 and the control rod assembly 140. This ensures that in case of a power cutoff, the control rod assembly 140 is not at risk of falling, especially when being switched. Therefore, the coupler 113 may be an electromagnet, a permanent magnet, a mechanical latch or locking device or another device to provide mechanical attachment between the extractor 103 and the control rod assembly 140.

When attachment between the extractor 103 and the drive assembly 110 or the control rod assembly 140 take place, power is provided by the switching system 100 to the drive assembly 110. According to at least some embodiments, when attachment between the extractor 103 and the drive assembly 110 or the control rod assembly 140 take place, power is provided by the extractor 103 to the drive assembly 110. This may be accomplished via an electrical connector or a socket in the extractor 103 connecting to an electrical connector counterpart 111 or socket counterpart located on the drive assembly 110. Power connection to the drive assembly 110 is desirable in order to power the drive assembly electromagnet 119 so that an attachment between the drive assembly electromagnet 119 and the control rod assembly 140 is possible. During the first attachment step, power may be immediately provided to the drive assembly electromagnet 119, and if the control rod assembly surface 142 is already in contact with the drive assembly electromagnet 119, then there is an attachment between the extractor 103, the drive assembly 110 and the control rod assembly 140. Thus, the drive assembly 110 and the control rod assembly are ready to be extracted by moving them as one unit by the extractor 103.

Extracting refers to completely removing the control rod assembly 140 out of the fuel assembly 150. There may be an intermediate step between extracting and attachment, which is withdrawing the control rod assembly 140 at least partially from the fuel assembly 150 by driving the control rod assembly 140 by the drive assembly. In other words, power is directed to the drive assembly motor 112, which causes the driving shaft 116 to rise or lower. The driving shaft 116 may be a threaded shaft. This means that the drive assembly 110 typically is stationary. For example, FIGURE 7 illustrates the control rod assembly 140, which have already been withdrawn upwards by the drive assembly 110. Note that the control rod assembly 140 have traveled a distance between the fuel assembly 150 and a casing upper section 151. This distance essentially is defined by the inner space of the casing 115. According to the illustrated embodiment in FIGURE 7, the extractor 103, before withdrawing occurs, moves downwards up to the casing upper section 151, which is essentially the top of the casing 115. At this location there is the attachment between the coupler 113 and the drive assembly 110. Since the control rod assembly 140 is attached to the drive assembly electromagnet 119, the control rod assembly 140 rises or lowers with the driving shaft 116. This allows the control rod assembly 140 to be withdrawn at least partially from the fuel assembly 150 to allow the control rod assembly 140 to be drawn closer to the drive assembly 110, in a position that may be referred to as the compact configuration of the drive assembly 110 and the control rod assembly 140. The benefit of the compact configuration is so that the drive assembly 110 and control rod assembly 140 is not as long, and therefore is more stable and minimizes swaying, when being switched or transported.

The fuel and control module 130 may have a casing 115. The casing 115 is typically an elongated vertical structure attached on top of or below the fuel assembly 150, depending on the configuration of the extraction of the control rod assembly 140. The drive assembly 110 may rest atop of the casing 115, essentially at the casing upper section 151, where there is a temporary attachment between the casing 115 and the drive assembly 110. The temporary attachment may be accomplished with holes in the drive assembly 110 and corresponding pins in the casing 115 or vice versa or by another means known in the art.

The casing 115 defines an inner space, where the drive assembly 110 rests atop of the inner space. The inner space is above the fuel assembly 150. As the drive assembly motor 112 rests atop of the casing 115, the control rod assembly 140 may travel within the inner space. The drive assembly electromagnet 119 may travel within the inner space. According to at least some embodiments, the drive assembly 110 is powered and can thus electromagnetically attach itself to the control rod assembly 140. Then, the drive assembly 110 is able to withdraw the control rod assembly 140 towards the drive assembly 110 while the drive assembly 110 remains in the same vertical position. The drive assembly 110 can withdraw the control rod assembly 140 to the compact position of the control rod assembly 140. Thus, the control rod assembly 140 travels within the inner space as the control rod assembly 140 is being withdrawn by the drive assembly. The control rod assembly 140 may also be withdrawn while the drive assembly 110 is being lifted. The casing 115 can provide the benefit of providing space to facilitate the withdrawal of the control rod assembly 140 by the drive assembly 110.

According to a different embodiment, a casing 115 is not used to define the inner space mentioned above, however there is an inner space above the fuel assembly 150 in which the control rod assembly 140 is being withdrawn by the drive assembly 110.

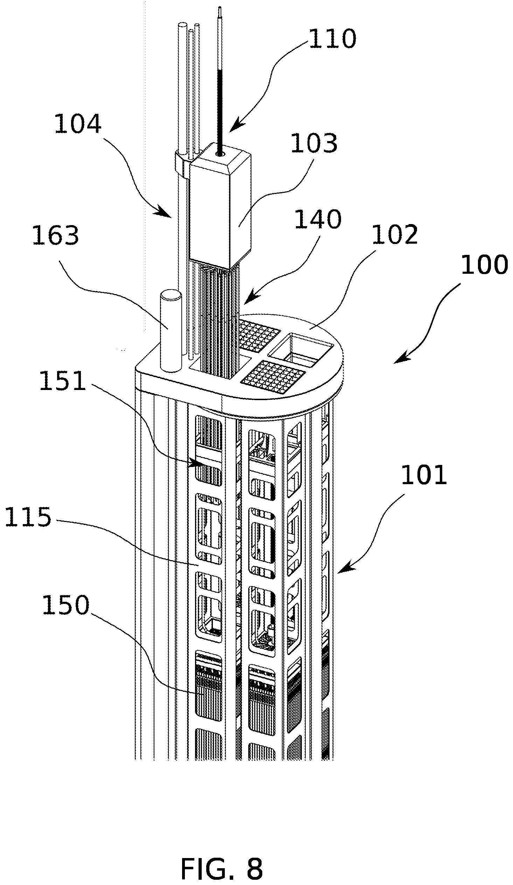

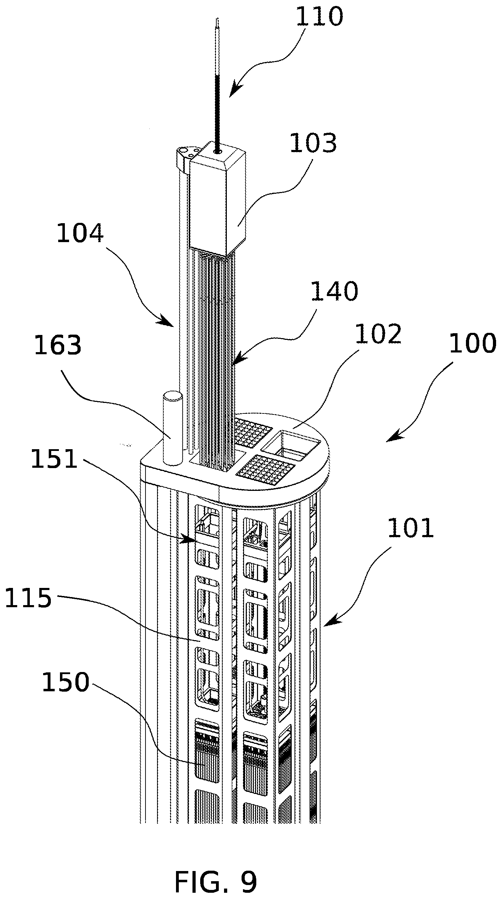

Referring back to the extraction procedure, extraction may occur subsequent to the first attachment step or the withdrawal. Extraction involves removing the control rod assembly 140 from the fuel assembly 150. According to at least some embodiments, extraction involves removing the control rod assembly 140 and the drive assembly 110 from the fuel assembly 150 by the extractor 103. According to the illustrative embodiment of FIGURE 8, the extractor 103 accomplishes this by moving upwards along the guide 104. Note that the extractor 103, together with the control rod assembly 140 and the drive assembly 110 is starting to separate from the fuel assembly 150 and the casing 115. Thus the fuel and control module 130 is being separated itself. During extraction, the control rod assembly 140 is completely removed from the fuel assembly 150, which is an extracted position. The extracted position may also refer to the control rod assembly 140 being completely removed from the magazine 101. Therefore, the extractor 103 is able to move between the attaching position, in which the extractor 103 is attached to the drive assembly 110 or the control rod assembly 140, and the extracted position, in which the extractor 103 has extracted the drive assembly 110 or the control rod assembly 140, or the drive assembly 110 and the control rod assembly (140) from the magazine. According to the illustrative embodiment of FIGURE 9, the extractor 103 has moved upwards along the guide 104 to the point where the extractor 103, the control rod assembly 140 and the drive assembly 110 are in the extracted position. Note that the bottom tip of the control rods are above the magazine 101 and therefore there is clearance for the next step, which according to the illustrated embodiment of FIGURE 9 is to rotate the magazine 101.

The objective of the switching system 100 is to transport a control rod assembly 140 from a fuel assembly 150 to another fuel assembly 150. In order for this to happen after the extraction, respective movement is provided between the extractor 103 and the magazine 101 in a similar fashion as in the first respective movement. Before there is respective movement between such components, the control rod assembly 140 shall be in a position where there are no obstructions in the path of travel of the control rod assembly 140. This position may be referred to as a switching state positon, in which the switching state occurs during a switching of the control rod assembly 140. In other words, the switching state involves respective movement between the magazine 101 and the extractor 103 while a control rod assembly 140 is attached to the extractor 103. The switching state position may be the same as the extracted position. According to at least some embodiments, the drive assembly 110 is also attached to the extractor 103 in the switching state. For example, FIGURE 9 illustrates the control rod assembly 140 in the switching state position according to at least some embodiments. The control rod assembly 140 is clear from obstructions (the bottommost part of the control rod assembly 140 is above the magazine 101) while the magazine 101 is able to rotate.

The respective movement between the extractor 103 and the magazine 101, or the switching state allows the extractor 103 to align to another fuel assembly 150 in another holding position 135, or a second fuel assembly in a second holding position 135. The first drive train 160 and the first motor 161 may be controlled to allow for precise alignment between the extractor 103 and a holding position 135.

According to at least some embodiments, the extractor 103 (along with the frame 102) moves and the magazine 101 is stationary during the switching task. In this embodiment, it may be desired that the control rod assembly 140 is in the compact position (i.e. the control rod assembly 140 has been withdrawn upwards to the drive assembly). The reason is that the control rod assembly 140 is moving and there may be more swaying or unstable movement if the control rod assembly 140 is lower.

Once the extractor 103 is aligned with the desired holding position 135 caused by switching, the extractor 103 introduces the control rod assembly 140 to the second fuel assembly 150 in the second holding position 135. This is accomplished by providing respective movement similar to the second respective movement, i.e. by lowering or raising the control rod assembly 140 by the extractor 103. According to the illustrated embodiments in FIGURES 1-3 and FIGURES 7-9, introducing involves lowering the control rod assembly 140 towards the fuel assembly 150.

The control rod assembly 140 is then placed appropriately within the second fuel assembly 150. According to at least some embodiments, the control rod assembly 140 is lowered completely into the second fuel assembly 150. According to at least some embodiments, the extractor 103 causes partial insertion of the control rod assembly 140 into the second holding position 135 (and possibly partial insertion of the control rod assembly 140 into the second fuel assembly 150), and then the drive assembly 110 can drive the control rod assembly 140 to completely insert the control rod assembly 140 into the second fuel assembly 150. Driving the control rod assembly 140 by the drive assembly 110 to insert the control rod assembly 140 into a fuel assembly 150 may be beneficial as it can handle the control rod assembly 140 precisely, and carefully minimize the impact on the surrounding surfaces of the fuel assembly 150.

Once the control rod assembly 140 is fully inserted into the desired fuel assembly, the extractor 103 may detach from the control rod assembly 140 via the coupler 113. According to at least some embodiments, the power to the extractor electromagnet is shut off causing the extractor electromagnet to detach from the drive assembly 110. As a result, the extractor 103 may relatively move away from the second holding position 135.

Subsequently, there may be respective movement between the extractor 103 and the magazine 101 in order to align the extractor 103 to a holding position 135, which could be a third and separate holding position 135. As a result, the above-mentioned steps could be repeated but for different control rod assemblies 140 and drive assemblies 110 (e.g. a second control rod assembly) and for different or the same holding positions 135 and fuel assemblies.

To summarize and to give an example according to FIGURE 10A, the extractor 103 can align with a first fuel assembly 150 of a first fuel and control module 130 in a first holding position 210, the extractor 103 attaches to the drive assembly 110 of the first fuel and control module 130. Then, the extractor 103 can extract the control rod assembly 140 of the first fuel and control module 130 (the extractor 103 can also withdraw the control rod assembly 140 via a drive assembly motor 112). The extractor 103 will lift the control rod assembly 140 so that there is clearance for respective movement between the extractor 103 and the magazine 101. Then, the first drive train 160 provides respective movement between the extractor 103 and the magazine 101 allowing the extractor 103 to align with a second fuel assembly 150 of a second holding position 220. The extractor 103 inserts the control rod assembly 140 into the second fuel assembly 150. Further, the switching system 100 can switch a second control rod assembly 140 from a fuel assembly 150 in a third holding position 230 into a fuel assembly 150 in the first holding position 210. This is a very similar procedure as the first steps of aligning, attaching, extracting, and inserting, with a difference at least in that the respective movement between the extractor 103 and the magazine 101 may be longer at some instances. Further, the switching system 100 can switch a third control rod assembly 140 from a fuel assembly 150 in a fourth holding position 240 into a fuel assembly 150 in the third holding position 230. According to this example, the fuel assembly 150 in the second holding positions 220 is ideally a new fuel assembly 150 and the remainder fuel assemblies 150 in holding positions 210, 230 and 240 have ideally gone through at least one operating cycle. In addition, the remaining fuel assembly 150 in holding position 240 has gone through its final cycle (it becomes spent fuel) and is ready to be processed as waste.

As explained above, there may be one new fuel assembly 150 in the magazine 101 with the remainder of the holding positions 135 holding a fuel assembly 150 that has gone through at least one operating cycle. The switching system 100 thus allows for an effective manner of reusing control rod assemblies 140 and drive assemblies 110 for fuel assemblies 150 for the next operating cycle, regardless if the fuel assemblies 150 have been through none, one, or multiple operating cycles.

A person skilled in the art may foresee several variants of the above described embodiment.

The magazine 101 may have more or less than four holding positions 135. There may be 2, 3, 4, 5, 6 or more holding positions 135 within the magazine 101. The holding positions may be arranged in a circular pattern, a linear pattern, a linear pattern with rows, or another pattern that is desired.

The holding position 135 may be a space configured to receive a fuel assembly 150 or fuel and control module 130. The holding positon 135 may have a structure such as an enclosure for receiving and holding the fuel assemblies 150.

The frame 102 may be in the form of a body with several parts such as plates as illustrated in FIGURE 3, or the frame 102 may have a scaled down structure. For example, the frame 102 could be a housing that encompasses the extractor 103 and the frame 102 interacts with the magazine 101 in a manner resembling a can opener with a can, i.e. the frame 102 does not extend the height of the magazine 101 and the frame 102 is simply located at one end of the magazine 101. Therefore, there are several possibilities as to the form in which the frame 102 may take and as to the manner to provide respective movement between the extractor 103 and the magazine 101. For example, the frame 102 could be a housing that houses the extractor 103 and the frame 102 could be movably attached to a mechanism that provides linear movement in three axis, for example with three conveyors as seen in 3D printers. Alternatively, the extractor 103 and frame 102 could make up a six-axis robot with a component to provide vertical movement for extracting and introducing.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### REFERENCE SIGNS LIST

| NO. | FEATURE | NO. | FEATURE |
|---|---|---|---|
| 100 | switching system | 140 | control rod assembly |
| 101 | magazine | 141 | control rod assembly shaft |
| 102 | frame | 142 | control rod assembly surface |
| 103 | extractor | 143 | support |
| 104 | guide | 144 | control rod |
| 105 | motor | 150 | fuel assembly |
| 106 | cover | 151 | casing upper section |
| 107 | module opening | 160 | first drive train |
| 108 | extractor access port | 161 | first motor |
| 109 | loader opening | 162 | second drive train |
| 110 | drive assembly | 163 | second motor |
| 111 | electrical connector counterpart | 210 | first holding position |
| 112 | drive assembly motor | 220 | second holding position |
| 113 | coupler | 230 | third holding position |
| 115 | casing | 240 | fourth holding position |
| 116 | driving shaft | 310 | first holding position |
| 119 | drive assembly electromagnet | 320 | second holding position |
| 130 | fuel and control module | 330 | third holding position |
| 135 | holding position | 340 | fourth holding position |

## Claims

1. A switching system (100) for switching a control rod assembly (140) between a plurality of fuel assemblies (150) of a respective plurality of fuel and control modules (130) of a nuclear reactor, wherein each one of the plurality of fuel and control modules (130) comprises a drive assembly (110), a control rod assembly (140) and a fuel assembly (150), wherein the switching system (100) comprises a frame (102),
**characterized by** the switching system (100) comprising:
- a magazine (101) movably attached to the frame (102), the magazine (101) comprising a plurality of holding positions (135) each configured to receive a fuel assembly (150),
- an extractor (103) provided to the frame (102), and
- a first drive train (160), which is configured to provide respective movement between the magazine (101) and the frame (102) for selectively aligning any one of said plurality of holding positions (135) with the extractor (103),
wherein the extractor (103) is configured to:
- attach to a drive assembly (110) or a control rod assembly (140), or a drive assembly (110) and a control rod assembly (140) of one of the plurality of fuel and control modules (130), and to
- directly or indirectly extract a control rod assembly (140) from a fuel assembly (150) located in one of the plurality of holding positions (135) and to introduce the control rod assembly (140) to a fuel assembly (150) located in another holding position (135).

2. The switching system (100) according to claim 1, wherein the extractor (103) is configured to move between an attaching position, in which the extractor (103) is attached to the drive assembly (110) or the control rod assembly (140), and an extracted position, in which the extractor (103) has extracted the drive assembly (110) or the control rod assembly (140), or the drive assembly (110) and the control rod assembly (140) from the magazine (101).

3. The switching system (100) according to claim 1 or 2, wherein the frame (102) comprises an extractor access port (108) configured to align the extractor (103) with and provide access to one of the plurality of holding positions (135).

4. The switching system (100) according to claim 2 or 3, wherein the frame (102) comprises a guide (104), which is configured to guide the extractor (103) between the attaching position and the extracted position, and a second drive train (162), which is configured to provide respective movement between the extractor (103) and the guide (104) for moving the extractor (103) between the attaching position and the extracted position.

5. The switching system (100) according to any one of the preceding claims, wherein the extractor (103) comprises a coupler (113) configured to provide a direct or indirect mechanical attachment between the extractor (103) and the control rod assembly (140).

6. The switching system (100) according to claim 5, wherein the coupler (113) is an extractor electromagnet, wherein the extractor electromagnet is configured to attach the extractor (103) to the drive assembly (110).

7. The switching system (100) according to any one of the preceding claims, wherein the drive assembly (110) and the control rod assembly (140) are configured to move as one unit, whereby the extractor (103) is configured to indirectly manipulate the control rod assembly (140), when the extractor (103) is attached to the drive assembly (110).

8. The switching system (100) according to any one of the preceding claims, wherein the first drive train (160) is configured to provide respective rotation or translation between the magazine (101) and the frame (102) for selectively aligning any one of said plurality of holding positions (135) with the extractor (103).

9. The switching system (100) according to any one of the preceding claims, further comprising an electrical connector configured to provide an electrical connection to the drive assembly (110) for powering the drive assembly (110).

10. The switching system (100) according to claim 9, wherein the extractor (103) comprises the electrical connector and the drive assembly (110) comprises an electrical connector counterpart (111).

11. The switching system (100) according to claim 10, wherein the electrical connector counterpart (111) is configured to connect to the electrical connector and selectively power the drive assembly electromagnet (119) and the drive assembly motor (112), when the extractor (103) attaches to the drive assembly (110) at the attachment position of the extractor (103).

12. The switching system (100) according to any one of the preceding claims, wherein the extractor (103) is configured to manipulate the drive assembly (110) so that the drive assembly (110) selectively attaches to and detaches from a casing (115), wherein the fuel and control module (130) comprises the casing (115) attached to the fuel assembly (150).

13. The switching system (100) according to claim 12, wherein the extractor (103) is configured to move the control rod assembly (140) within an inner space, wherein the casing (115) defines the inner space, and wherein the drive assembly (110) is configured to drive the control rod assembly (140) within the inner space.

14. A method for switching a control rod assembly (140) between a plurality of fuel assemblies (150) located within the switching system (100) according to any one of the preceding claims, comprising:
- aligning the extractor (103) with a first holding position (135) containing a first fuel and control module (130),
- attaching the extractor (103) directly or indirectly to a first control rod assembly (140) of the first fuel and control module (130) at an attaching position of the extractor (103),
- extracting the first control rod assembly (140) of the first fuel and control module (130) by the extractor (103), wherein the first control rod assembly (140) is completely removed from the first fuel assembly (150) of the first fuel and control module (130),
- providing respective movement between the extractor (103) and the magazine (101) for aligning the extractor (103) with a second holding position (135) containing a second fuel assembly (150) of a second fuel and control module (130), and
- introducing the first control rod assembly (140) to the second fuel assembly (150) by the extractor (103).

15. The method of claim 14, further comprising forming, after attaching and before extracting, an electrical connection between the switching system (100) and the first drive assembly (110) of the first fuel and control module (130).

16. The method of claim 15, further comprising withdrawing, after forming and before extracting, wherein the casing (115) according to claim 12 defines an inner space and the first control rod assembly (140) is withdrawn, at least partially, by the first drive assembly (110) from the first fuel assembly (150) of the first fuel and control module (130) within the inner space.

17. The method of claim 16, further comprising inserting, after introducing, the first control rod assembly (140) into the second fuel assembly (150), wherein the control rod assembly (140) travels within the inner space.

18. The method of any one of the preceding claims 14 - 17, wherein aligning, attaching, extracting, providing and introducing make up a first switching procedure,
the method further comprising a second switching procedure, the second switching procedure comprising repeating the steps in the first switching procedure for different and separate control rod assemblies (140) and fuel assemblies (150).

19. The method of any of the preceding claims 15 - 18 wherein the extractor (103) attaches to the first drive assembly (110) via the coupler (113) according to claim 5 or 6 or any one of the preceding claims 7 to 11 when dependent on claim 5 or 6.

## Patentansprüche

1. Schaltsystem (100) zum Umschalten einer Steuerstabbaugruppe (140) zwischen einer Vielzahl von Brennstoffbaugruppen (150) einer jeweiligen Vielzahl von Brennstoff- und Steuerungsmodulen (130) eines Kernreaktors, wobei jedes der Vielzahl von Brennstoff- und Steuerungsmodulen (130) eine Antriebsbaugruppe (110), eine Steuerstabbaugruppe (140) und eine Brennstoffbaugruppe (150) umfasst, wobei das Schaltsystem (100) einen Rahmen (102) umfasst, **dadurch gekennzeichnet, dass** das Schaltsystem (100) umfasst:
- ein Magazin (101), das beweglich am Rahmen (102) befestigt ist, wobei das Magazin (101) eine Vielzahl von Haltepositionen (135) umfasst, die jeweils zur Aufnahme einer Brennstoffbaugruppe (150) ausgebildet sind,
- einen Extraktor (103), der dem Rahmen (102) bereitgestellt wird, und
- einen ersten Antriebsstrang (160), der so ausgebildet ist, dass er eine entsprechende Bewegung zwischen dem Magazin (101) und dem Rahmen (102) bereitstellt, um eine der Vielzahl von Haltepositionen (135) wahlweise mit dem Extraktor (103) auszurichten,
wobei der Extraktor (103) ausgebildet ist, um:
- sich an einer Antriebsbaugruppe (110) oder einer Steuerstabbaugruppe (140) oder einer Antriebsbaugruppe (110) und einer Steuerstabbaugruppe (140) eines der Vielzahl von Brennstoff- und Steuerungsmodulen (130) zu befestigen, und um
- direkt oder indirekt eine Steuerstabbaugruppe (140) aus einer Brennstoffbaugruppe (150) in einer der Vielzahl von Haltepositionen (135) zu entnehmen und die Steuerstabbaugruppe (140) in eine Brennstoffbaugruppe (150) in einer anderen Halteposition (135) einzuführen.

2. Schaltsystem (100) nach Anspruch 1, wobei der Extraktor (103) so ausgebildet ist, dass er sich zwischen einer Befestigungsposition, in der der Extraktor (103) an der Antriebsbaugruppe (110) oder der Steuerstabbaugruppe (140) befestigt ist, und einer Entnahmeposition, in der der Extraktor (103) die Antriebsbaugruppe (110) oder die Steuerstabbaugruppe (140) oder die Antriebsbaugruppe (110) und die Steuerstabbaugruppe (140) aus dem Magazin (101) entnommen hat, bewegen kann.

3. Schaltsystem (100) nach Anspruch 1 oder 2, wobei der Rahmen (102) eine Extraktorzugangsöffnung (108) umfasst, die so ausgebildet ist, dass der Extraktor (103) mit einer der Vielzahl von Haltepositionen (135) ausgerichtet ist und Zugang zu dieser bereistellt.

4. Schaltsystem (100) nach Anspruch 2 oder 3, wobei der Rahmen (102) eine Führung (104) umfasst, die so ausgebildet ist, dass sie den Extraktor (103) zwischen der Befestigungsposition und der Entnahmeposition führt, und einen zweiten Antriebsstrang (162), der so ausgebildet ist, dass er eine jeweilige Bewegung zwischen dem Extraktor (103) und der Führung (104) zum Bewegen des Extraktors (103) zwischen der Befestigungsposition und der Entnahmeposition bereitstellt.

5. Schaltsystem (100) nach einem der vorstehenden Ansprüche, wobei der Extraktor (103) einen Koppler (113) umfasst, der so ausgebildet ist, dass er eine direkte oder indirekte mechanische Befestigung zwischen dem Extraktor (103) und der Steuerstabbaugruppe (140) bereitstellt.

6. Schaltsystem (100) nach Anspruch 5, wobei der Koppler (113) ein Extraktor-Elektromagnet ist, wobei der Extraktor-Elektromagnet so ausgebildet ist, dass er den Extraktor (103) an der Antriebsbaugruppe (110) befestigt.

7. Schaltsystem (100) nach einem der vorstehenden Ansprüche, wobei die Antriebsbaugruppe (110) und die Steuerstabbaugruppe (140) ausgebildet sind, um sich als eine Einheit zu bewegen, und der Extraktor (103) dazu ausgebildet ist, die Steuerstabbaugruppe (140) indirekt zu betätigen, wenn der Extraktor (103) an der Antriebsbaugruppe (110) befestigt ist.

8. Schaltsystem (100) nach einem der vorstehenden Ansprüche, wobei der erste Antriebsstrang (160) so ausgebildet ist, dass er eine jeweilige Drehung oder Verschiebung zwischen dem Magazin (101) und dem Rahmen (102) bereitstellt, um eine der Vielzahl von Haltepositionen (135) wahlweise mit dem Extraktor (103) auszurichten.

9. Schaltsystem (100) nach einem der vorstehenden Ansprüche, weiter umfassend einen elektrischen Anschluss, der so ausgebildet ist, dass er eine elektrische Verbindung zur Antriebsbaugruppe (110) bereitstellt, um die Antriebsbaugruppe (110) mit Strom zu versorgen.

10. Schaltsystem (100) nach Anspruch 9, wobei der Extraktor (103) den elektrischen Anschluss umfasst und die Antriebsbaugruppe (110) ein entsprechendes elektrisches Anschlussgegenstück (111) umfasst.

11. Schaltsystem (100) nach Anspruch 10, wobei das elektrische Anschlussgegenstück (111) so ausgebildet ist, dass es mit dem elektrischen Anschluss verbunden wird und wahlweise den Elektromagneten (119) und den Motor (112) der Antriebsbaugruppe mit Strom versorgt, wenn der Extraktor (103) an der Befestigungsposition des Extraktors (103) an der Antriebsbaugruppe (110) befestigt wird.

12. Schaltsystem (100) nach einem der vorstehenden Ansprüche, wobei der Extraktor (103) so ausgebildet ist, dass er die Antriebsbaugruppe (110) so betätigt, dass die Antriebsbaugruppe (110) wahlweise an einem Gehäuse (115) befestigt und von diesem getrennt wird, wobei das Brennstoff- und Steuerungsmodul (130) das an der Brennstoffbaugruppe (150) befestigte Gehäuse (115) umfasst.

13. Schaltsystem (100) nach Anspruch 12, wobei der Extraktor (103) so ausgebildet ist, dass er die Steuerstabbaugruppe (140) innerhalb eines Innenraums bewegt, wobei das Gehäuse (115) den Innenraum definiert, und wobei die Antriebsbaugruppe (110) so ausgebildet ist, dass sie die Steuerstabbaugruppe (140) innerhalb des Innenraums antreibt.

14. Verfahren zum Umschalten einer Steuerstabbaugruppe (140) zwischen einer Vielzahl von Brennstoffbaugruppen (150), die sich innerhalb des Schaltsystems (100) befinden, nach einem der vorstehenden Ansprüche, umfassend:
- Ausrichten des Extraktors (103) an einer ersten Halteposition (135), die ein erstes Brennstoff- und Steuerungsmodul (130) enthält,
- Befestigen des Extraktors (103) direkt oder indirekt an einer ersten Steuerstabbaugruppe (140) des ersten Brennstoff- und Steuerungsmoduls (130) an einer Befestigungsposition des Extraktors (103),
- Entnehmen der ersten Steuerstabbaugruppe (140) des ersten Brennstoff- und Steuerungsmoduls (130) mittels des Extraktors (103), wobei die erste Steuerstabbaugruppe (140) vollständig aus der ersten Brennstoffbaugruppe (150) des ersten Brennstoff- und Steuerungsmoduls (130) entfernt wird,
- Bereitstellen einer entsprechenden Bewegung zwischen dem Extraktor (103) und dem Magazin (101) zum Ausrichten des Extraktors (103) mit einer zweiten Halteposition (135), die eine zweite Brennstoffbaugruppe (150) eines zweiten Brennstoff- und Steuerungsmoduls (130) enthält, und
- Einführen der ersten Steuerstabbaugruppe (140) in die zweite Brennstoffbaugruppe (150) mittels des Extraktors (103).

15. Verfahren nach Anspruch 14, weiter umfassend Bilden einer elektrischen Verbindung zwischen dem Schaltsystem (100) und der ersten Antriebsbaugruppe (110) des ersten Brennstoff- und Steuerungsmoduls (130) nach dem Befestigen und vor dem Entnehmen.

16. Verfahren nach Anspruch 15, weiter umfassend Zurückziehen nach dem Bilden und vor dem Entnehmen, wobei das Gehäuse (115) nach Anspruch 12 einen Innenraum definiert und die erste Steuerstabbaugruppe (140) durch die erste Antriebsbaugruppe (110) zumindest teilweise aus der ersten Brennstoffbaugruppe (150) des ersten Brennstoff- und Steuerungsmoduls (130) innerhalb des Innenraums zurückgezogen wird.

17. Verfahren nach Anspruch 16, weiter umfassend Einsetzen der ersten Steuerstabbaugruppe (140) in die zweite Brennstoffbaugruppe (150) nach dem Einführen, wobei sich die Steuerstabbaugruppe (140) innerhalb des Innenraums bewegt.

18. Verfahren nach einem der vorstehenden Ansprüche 14-17, wobei Ausrichten, Befestigen, Entnehmen, Bereitstellen und Einführen eine erste Schaltprozedur bilden, wobei das Verfahren weiter eine zweite Schaltprozedur umfasst, wobei die zweite Schaltprozedur Wiederholen der Schritte der ersten Schaltprozedur für verschiedene und separate Steuerstabbaugruppen (140) und Brennstoffbaugruppe (150) umfasst.

19. Verfahren nach einem der vorstehenden Ansprüche 15-18, wobei der Extraktor (103) über den Koppler (113) nach Anspruch 5 oder 6 oder einem der vorstehenden Ansprüche 7 bis 11, wenn abhängig von Anspruch 5 oder 6, an der ersten Antriebsbaugruppe (110) befestigt ist.

## Revendications

1. Système de commutation (100) pour commuter un ensemble de barre de contrôle (140) entre une pluralité d'ensembles de combustible (150) d'une pluralité respective de modules de combustible et de contrôle (130) d'un réacteur nucléaire, dans lequel chacun de la pluralité de modules de combustible et de contrôle (130) comprend un ensemble d'entraînement (110), un ensemble de barre de contrôle (140) et un ensemble de combustible (150), dans lequel le système de commutation (100) comprend un cadre (102), **caractérisé en ce que** le système de commutation (100) comprend :
- un magasin (101) fixé de manière mobile au cadre (102), le magasin (101) comprenant une pluralité de positions de maintien (135) chacune configurée pour recevoir un ensemble de combustible (150),
- un extracteur (103) monté sur le cadre (102), et
- une première chaîne cinématique (160), qui est configurée pour fournir un mouvement respectif entre le magasin (101) et le cadre (102) afin d'aligner sélectivement l'une quelconque de ladite pluralité de positions de maintien (135) avec l'extracteur (103),
dans lequel l'extracteur (103) est configuré pour :
- se fixer à un ensemble d'entraînement (110) ou à un ensemble de barre de contrôle (140), ou à un ensemble d'entraînement (110) et à un ensemble de barre de contrôle (140) de l'un de la pluralité de modules de combustible et de contrôle (130), et à
- extraire directement ou indirectement un ensemble de barre de contrôle (140) d'un ensemble de combustible (150) situé dans l'une de la pluralité de positions de maintien (135) et à introduire l'ensemble de barre de contrôle (140) dans un ensemble de combustible (150) situé dans une autre position de maintien (135).

2. Système de commutation (100) selon la revendication 1, dans lequel l'extracteur (103) est configuré pour se déplacer entre une position de fixation, dans laquelle l'extracteur (103) est fixé à l'ensemble d'entraînement (110) ou à l'ensemble de barre de contrôle (140), et une position extraite, dans laquelle l'extracteur (103) a extrait l'ensemble d'entraînement (110) ou l'ensemble de barre de contrôle (140), ou l'ensemble d'entraînement (110) et l'ensemble de barre de contrôle (140) du magasin (101).

3. Système de commutation (100) selon la revendication 1 ou 2, dans lequel le cadre (102) comprend un port d'accès à l'extracteur (108) configuré pour aligner l'extracteur (103) avec et fournir l'accès à l'une de la pluralité de positions de maintien (135).

4. Système de commutation (100) selon la revendication 2 ou 3, dans lequel le cadre (102) comprend un guide (104), qui est configuré pour guider l'extracteur (103) entre la position de fixation et la position extraite, et une seconde chaîne cinématique (162), qui est configurée pour fournir un mouvement respectif entre l'extracteur (103) et le guide (104) afin de déplacer l'extracteur (103) entre la position de fixation et la position extraite.

5. Système de commutation (100) selon l'une quelconque des revendications précédentes, dans lequel l'extracteur (103) comprend un coupleur (113) configuré pour fournir une fixation mécanique directe ou indirecte entre l'extracteur (103) et l'ensemble de barre de contrôle (140).

6. Système de commutation (100) selon la revendication 5, dans lequel le coupleur (113) est un électroaimant d'extracteur, dans lequel l'électroaimant d'extracteur est configuré pour fixer l'extracteur (103) à l'ensemble d'entraînement (110).

7. Système de commutation (100) selon l'une quelconque des revendications précédentes, dans lequel l'ensemble d'entraînement (110) et l'ensemble de barre de contrôle (140) sont configurés pour se déplacer comme une seule unité, selon lequel l'extracteur (103) est configuré pour manipuler indirectement l'ensemble de barre de contrôle (140), lorsque l'extracteur (103) est fixé à l'ensemble d'entraînement (110).

8. Système de commutation (100) selon l'une quelconque des revendications précédentes, dans lequel la première chaîne cinématique (160) est configurée pour fournir une rotation ou une translation respective entre le magasin (101) et le cadre (102) afin d'aligner sélectivement l'une quelconque de la pluralité de positions de maintien (135) avec l'extracteur (103).

9. Système de commutation (100) selon l'une quelconque des revendications précédentes, comprenant en outre un connecteur électrique configuré pour fournir une connexion électrique à l'ensemble d'entraînement (110) pour alimenter l'ensemble d'entraînement (110).

10. Système de commutation (100) selon la revendication 9, dans lequel l'extracteur (103) comprend le connecteur électrique et l'ensemble d'entraînement (110) comprend un homologue de connecteur électrique (111).

11. Système de commutation (100) selon la revendication 10, dans lequel l'homologue de connecteur électrique (111) est configuré pour se connecter au connecteur électrique et alimenter sélectivement l'électroaimant d'ensemble d'entraînement (119) et le moteur d'ensemble d'entraînement (112), lorsque l'extracteur (103) se fixe à l'ensemble d'entraînement (110) à la position de fixation de l'extracteur (103).

12. Système de commutation (100) selon l'une quelconque des revendications précédentes, dans lequel l'extracteur (103) est configuré pour manipuler l'ensemble d'entraînement (110) de sorte que l'ensemble d'entraînement (110) se fixe et se détache sélectivement d'un boîtier (115), dans lequel le module de combustible et de commande (130) comprend le boîtier (115) fixé à l'ensemble de combustible (150).

13. Système de commutation (100) selon la revendication 12, dans lequel l'extracteur (103) est configuré pour déplacer l'ensemble de barre de contrôle (140) dans un espace intérieur, dans lequel le boîtier (115) définit l'espace intérieur, et dans lequel l'ensemble d'entraînement (110) est configuré pour entraîner l'ensemble de barre de contrôle (140) dans l'espace intérieur.

14. Procédé de commutation d'un ensemble de barre de contrôle (140) entre une pluralité d'ensembles de combustibles (150) situés dans le système de commutation (100) selon l'une quelconque des revendications précédentes, comprenant :
- l'alignement de l'extracteur (103) avec une première position de maintien (135) contenant un premier module de combustible et de commande (130),
- la fixation de l'extracteur (103) directement ou indirectement à un premier ensemble de barre de contrôle (140) du premier module de combustible et de commande (130) à une position de fixation de l'extracteur (103),
- l'extraction du premier ensemble de barre de contrôle (140) du premier module de combustible et de commande (130) par l'extracteur (103), dans lequel le premier ensemble de barre de contrôle (140) est complètement retiré du premier ensemble de combustible (150) du premier module de combustible et de commande (130),
- l'assurance d'un mouvement respectif entre l'extracteur (103) et le magasin (101) pour aligner l'extracteur (103) avec une seconde position de maintien (135) contenant un second ensemble de combustible (150) d'un second module de combustible et de commande (130), et
- l'introduction du premier ensemble de barre de contrôle (140) dans le second ensemble de combustible (150) par l'extracteur (103).

15. Procédé selon la revendication 14, comprenant en outre une formation, après fixation et avant extraction, d'une connexion électrique entre le système de commutation (100) et le premier ensemble d'entraînement (110) du premier module de combustible et de commande (130).

16. Procédé selon la revendication 15, comprenant en outre un retrait, après formation et avant extraction, dans lequel le boîtier (115) selon la revendication 12 définit un espace intérieur et le premier ensemble de barre de contrôle (140) est retiré, au moins partiellement, par le premier ensemble d'entraînement (110) du premier ensemble de combustible (150) du premier module de combustible et de commande (130) dans l'espace intérieur.

17. Procédé selon la revendication 16, comprenant en outre une insertion, après introduction, du premier ensemble de barre de contrôle (140) dans le second ensemble de combustible (150), dans lequel l'ensemble de barre de contrôle (140) se déplace dans l'espace intérieur.

18. Procédé selon l'une quelconque des revendications précédentes 14-17, dans lequel l'alignement, la fixation, l'extraction, la fourniture et l'introduction constituent une première procédure de commutation, le procédé comprenant en outre une seconde procédure de commutation, la seconde procédure de commutation comprenant la répétition des étapes de la première procédure de commutation pour des ensembles de barre de contrôle (140) et des ensembles de combustibles (150) différents et séparés.

19. Procédé selon l'une quelconque des revendications précédentes 15-18, dans lequel l'extracteur (103) se fixe au premier ensemble d'entraînement (110) via le coupleur (113) selon la revendication 5 ou 6 ou l'une quelconque des revendications précédentes 7 à 11 lorsqu'elles dépendent de la revendication 5 ou 6.
